# EUROPÄISCHE PATENTSCHRIFT

(11) **EP 3 213 407 B1**
(45) Veröffentlichungstag und Bekanntmachung des Hinweises auf die Patenterteilung: **21.03.2018**
(21) Anmeldenummer: 15780872.6
(22) Anmeldetag: 14.10.2015
(51) Int. Cl.: H02S 50/10

(54) **COMBINERBOX MIT MOTORISCHER ÜBERSTROMSICHERUNG**
COMBINER BOX HAVING MOTORIZED OVERCURRENT PROTECTION
BOÎTIER MULTIPLEXEUR COMPRENANT UN DISJONCTEUR MOTORISÉ DE COURANT DE SURCHARGE

(30) Priorität: 27.10.2014 DE 102014115601
(43) Veröffentlichungstag der Anmeldung: 06.09.2017
(73) Patentinhaber: SMA Solar Technology AG, 34266 Niestetal (DE)
(72) Erfinder: SCHULZE, Gerold, 34121 Kassel (DE)
(86) Internationale Anmeldenummer: PCT/EP2015/073816
(87) Internationale Veröffentlichungsnummer: WO 2016/066429

(56) Entgegenhaltungen:
- EP-A1- 2 282 388
- WO-A2-2006/078685
- DE-A1-102008 008 505
- DE-U1-202012 007 257

## Beschreibung

### TECHNISCHES GEBIET DER ERFINDUNG

Die Erfindung bezieht sich auf eine Combinerbox mit Eingangsanschlüssen für Stringleitungen von mehreren Strings von Photovoltaikmodulen und Ausgangsanschlüssen für ein Paar von Ausgangsleitungen zu einem Wechselrichter sowie mit den weiteren Merkmalen des Oberbegriffs des unabhängigen Patentanspruchs 1. In einer solchen Combinerbox werden die mehreren Strings von Photovoltaikmodulen parallel geschaltet und mit den Ausgangsanschlüssen verbunden.

Dabei weist eine Schalteinrichtung, mit der die Eingangsanschlüsse den Ausgangsanschlüssen, d. h. die Strings dem Wechselrichter zuschaltbar sind, für jeden der Strings oder zumindest für jedes Paar von in der Combinerbox fest parallel geschalteten Strings mindestens einen separaten eingangsseitigen Schaltkontakt auf. Solange die Strings über die Schalteinrichtung noch nicht oder nicht mehr zugeschaltet sind, sind die Strings daher nicht nur von dem Wechselrichter, sondern auch untereinander getrennt. Maximal sind nach der Trennung von dem Wechselrichter noch die in der Combinerbox fest parallel geschalteten Paaren miteinander verbunden. Dies stellt sicher, dass keine Schädigungen der einzelnen Strings von Photovoltaikmodulen durch von anderen String von Photovoltaikmodulen generierte Ströme auftreten, die im Extremfall in Gegenrichtung durch einen String und damit durch jedes seiner Photovoltaikmodule fließen. Die Zulässigkeit der festen Parallelschaltung von zwei Strings in der Combinerbox beruht darauf, dass es für ein Photovoltaikmodul in der Regel unkritisch ist, wenn es den von nur einem anderen gleichartigen Photovoltaikmodul generierten Strom in Gegenrichtung leitet.

### STAND DER TECHNIK

Aus der DE 10 2008 008 505 A1 ist eine Combinerbox mit den Merkmalen des Oberbegriffs des unabhängigen Patentanspruchs 1 bekannt. Die Combinerbox weist Stromsammelschienen auf, an die die Eingangsanschlüsse für jeden String von Photovoltaikmodulen über Trennschalter sowie eine Schmelzsicherung in einem der Eingangsanschlüsse angeschlossen sind. Die Stromsammelschienen sind ihrerseits über einen Trennschalter an die Ausgangsleitungen angeschlossen. Um die einzelnen Strings durch eine Steuereinheit abschalten bzw. freischalten zu können, sind die Trennschalter mit elektronischen Schaltelementen zwischen den Eingangsanschlüssen und der Stromsammelschiene in Reihe geschaltet. Weiterhin ist eine Strommesseinheit zur Erfassung eines jeweiligen Stringstroms mit dem jeweiligen elektronischen Schaltelement in Reihe geschaltet. Die Steuereinheit steuert das jeweilige elektronische Schaltelement zum Abschalten des zugehörigen Strings an, falls ein jeweiliger erfasster Stringstrommesswert einen vorgegebenen Vergleichswert überschreitet. Typischerweise wird der Vergleichswert auf einen Stromwert festgelegt, der größer ist als das 1,4-fache des Nennwerts eines Photovoltaikmoduls. Herkömmliche Schmelzsicherungen sind auf höhere Werte ausgelegt, um eine fehlerhafte Auslösung der Sicherung, z. B. bedingt durch Alterung, durch Temperaturerhöhung während des Betriebs sowie durch auftretende Einstrahlungsspitzen bei Wolkengang von bis über 140 % des Nennwerts zu vermeiden. Die Vorteile der durch die elektronischen Schaltelemente in Verbindung mit den Strommesseinheiten und der Steuereinheit bereitgestellten elektronischen Sicherungen sind ihre schnelle Reaktion auf auftretende Überschreitungen des vorgegebenen Vergleichswerts durch den Stringstrom und, dass eine ausgelöste elektronische Sicherung wieder zugeschaltet werden kann. Die permanent in dem Stromfluss von den einzelnen Strings zu den Stromsammelschienen angeordneten elektronischen Schaltelemente verursachen jedoch permanente Leistungsverluste, und sie sind insbesondere dann, wenn viele Strings in einer Combinerbox parallel geschaltet werden, insbesondere zusammen mit den weiterhin vorhandenen Schmelzsicherungen ein erheblicher Kostenfaktor.

Aus der US 2007/0107767 A1 ist eine weitere Combinerbox mit den Merkmalen des Oberbegriffs des unabhängigen Patentanspruchs 1 bekannt. Hier sind Stromschienen direkt mit den Ausgangsanschlüssen verbunden. Eingangsanschlüsse für jeweils einen String sind über eine Schmelzsicherung, eine Messeinrichtung und eine Schalteinrichtung an die Stromsammelschienen angeschlossen. Die Messeinrichtung misst einen Stringstrom, und die Schalteinrichtung schaltet den jeweiligen String ab oder zu. Eine Steuereinrichtung wertet die Stringströme aus und steuert die Schalteinrichtungen. Die Steuereinrichtung kann auch über eine Fernsteuerung angesteuert werden, um die Schalteinrichtungen zum Zuschalten oder Abschalten der Strings zu betätigen. Die Schalteinrichtungen können ansteuerbare Schalter oder Relais sein. Bei einer Vielzahl von über die Combinerbox zusammengeschalteten Strings sind in der Combinerbox viele Schmelzsicherungen und Relais vorzusehen, die einen hohen Gesamtkostenaufwand bedeuten.

Aus der US 2006/0237058 A1 ist eine Combinerbox bekannt, bei der in je einem Eingangsanschluss für jeden String eine Schmelzsicherung mit einer Messeinrichtung und einem Halbleiterschalter in Reihe geschaltet ist. In dem jeweils anderen Eingangsanschluss ist eine weitere Messeinrichtung vorgesehen. Abhängig von den Signalen der Messeinrichtungen werden Stringströme ermittelt, und wiederum abhängig davon werden die Halbleiterschalter angesteuert.

Aus der EP 2 282 388 A1 ist eine Vorrichtung zum Einspeisen von elektrischer Energie von einer Vielzahl von Strings von Photovoltaikmodulen in ein Stromnetz bekannt. Dabei werden jeweils mehrere Strings über eine Combinerbox unter Absicherung durch Schmelzsicherungen parallel geschaltet. Für die Ausgangsleitungen jeder Combinerbox ist an einem Wechselrichter ein separater Anschluss vorgesehen, in dem Mittel zur Überstromsicherung und zum selektiven Abschalten der Combinerbox vorgesehen sind. Diese Mittel weisen einen Leistungsschalter auf, der motorisch öffenbar und schließbar ist. Der Leistungsschalter ist in dem Anschluss mit einer Strommesseinrichtung in Reihe geschaltet. Die Mittel zur Überstromsicherung in dem Wechselrichter weisen keine Schmelzsicherung auf.

Aus der WO 2007/048421 A2 ist eine Schaltsicherung mit Steuerung für Solarzellen bekannt. Dabei handelt es sich um eine elektrische Schaltungsanordnung zum Steuern der Ausgabe mindestens eines von mehreren parallel zueinander an Busleitungen angeschlossenen Strings von Photovoltaikmodulen. Für den String umfasst die Schaltungsanordnung einen mechanischen Schalter, um eine der Anschlussleitungen des Strings zu unterbrechen, eine Messeinrichtung zum Messen des durch den String fließenden Stroms und eine Steuerung zum Empfangen eines Signals von der Messeinrichtung und zur Steuerung des mechanischen Schalters. Die Steuerung ist vorgesehen, um den mechanischen Schalter zu öffnen, falls der Strom nicht innerhalb vorgegebener Grenzen liegt.

Aus der WO 2013/081851 A1 ist eine Combinerbox mit einer eingangsseitigen Schutzeinrichtung bekannt, die mithilfe eines Schutzschalters oder einer Sicherung die jeweiligen Stromkreise, die von Fehlerbedingungen, wie einem Erdschlussfehler oder einem Überstromfehler, betroffen sind, automatisch öffnet. Alle Ausgangsanschlüsse der Schutzvorrichtung sind an eine Busleitung angeschlossen, die über eine Trennvorrichtung einem der Ausgangsanschlüsse der Combinerbox zugeschaltet werden kann.

Aus der US 2013/0050906 A1 ist es bei einer mehreren Combinerboxen nachgeschalteten Sicherheitseinrichtung als Alternative zu einer Mehrzahl von einzelnen Schaltern, die jeweils mit einem Schalthebel betätigt werden können, bekannt, mehrere Eingangs- und Ausgangsleitungen an einen zentralen Schalter anzuschließen.

### AUFGABE DER ERFINDUNG

Der Erfindung liegt die Aufgabe zugrunde, eine Combinerbox aufzuzeigen, die trotz Integration hoher Sicherheitsfunktionen kostengünstig herstellbar ist.

### LÖSUNG

Die Aufgabe der Erfindung wird durch eine Combinerbox mit den Merkmalen des unabhängigen Patentanspruchs 1 gelöst. Bevorzugte Ausführungsformen der erfindungsgemäßen Combinerbox sind in den abhängigen Patentansprüchen definiert. Dabei beziehen sich die abhängigen Patentansprüche 15 und 16 auf eine Photovoltaikanlage mit mehreren erfindungsgemäßen Combinerboxen.

### BESCHREIBUNG DER ERFINDUNG

Eine erfindungsgemäße Combinerbox weist Eingangsanschlüsse für Stringleitungen von mehreren Strings von Photovoltaikmodulen, Ausgangsanschlüsse für ein Paar von Ausgangsleitungen zu einem Wechselrichter, eine Schalteinrichtung, mit der die Strings dem Wechselrichter zuschaltbar sind, und eine Überstromschutzeinrichtung auf. Die Schalteinrichtung umfasst ausgangsseitige Schaltkontakte und für jeden der Strings oder zumindest für jedes Paar von in der Combinerbox fest parallel geschalteten Strings mindestens einen separaten eingangsseitigen Schaltkontakt. Weiterhin weist die Schalteinrichtung einen Schaltkontaktantrieb auf, der ansteuerbar ist, um die Strings von dem Wechselrichter zu trennen. Die Überstromschutzeinrichtung unterbricht auftretende Überströme von oder zu jedem der Strings oder zumindest von jedem der Paare von in der Combinerbox fest verschalteten Strings. Dazu weist sie Stromsensoren auf, die den von oder zu jedem der Strings oder zumindest von oder zu jedem der Paare von in der Combinerbox fest parallel geschalteten Strings fließenden Strom messen; und sie ist derart ausgebildet, dass sie im Falle eines gemessenen Stroms, der eine Überstromgrenze überschreitet, den Schaltkontaktantrieb ansteuert, um zumindest den String oder das Paar von Strings, von oder zu dem der die Überstromgrenze überschreitende Strom fließt, von dem Wechselrichter zu trennen. Durch diese Trennung wird die Stromquelle abgetrennt, die den die Überstromgrenze überschreitenden Strom treibt. Erfindungsgemäß weist der Schaltantrieb einen gemeinsamen Bewegungsantrieb für mehrere Schaltkontakte auf, die mehreren der Strings oder mehreren der Paare von in der Combinerbox fest parallel geschalteten Strings zugeordnet sind.

Bei einer erfindungsgemäßen Combinerbox umfasst der Schaltkontaktantrieb keine separaten Bewegungsantriebe für jedes Paar aus einem eingangsseitigen und dem zugehörigen ausgangsseitigen Schaltkontakt. Es ist auch nicht nur ein gemeinsamer Bewegungsantrieb für die in beiden Eingangsleitungen eines Strings oder eines Paars von Strings angeordneten Schaltkontakte zur allpoligen Trennung des jeweiligen Strings oder Paars vorgesehen. Vielmehr ist jeder Bewegungsantrieb des Schaltkontaktantriebs bei der erfindungsgemäßen Combinerbox für die mehreren Strings bzw. Paaren von Strings zugeordneten Schaltkontakte vorgesehen. Entsprechend können diese Strings nur gemeinsam mit Hilfe des gemeinsamen Antriebs von dem Wechselrichter getrennt werden. Der Verzicht auf separate Bewegungsantriebe des Schaltkontaktantriebs für jeden einzelnen String bedeutet beispielsweise gegenüber einer Schalteinrichtung mit einem Relais für jeden einzelnen String ein erhebliches Einsparpotential, insbesondere wenn die Anzahl der Strings oder der Paare von Strings, für die ein gemeinsamer Bewegungsantrieb vorgesehen ist, mindestens fünf und insbesondere mindestens zehn beträgt.

Konkret kann der gemeinsame Bewegungsantrieb ein gemeinsames Kontaktelement mit den ausgangsseitigen Schaltkontakten für alle gleichpoligen eingangsseitigen Schaltkontakte bewegen, die den mehreren der Strings oder den mehreren der Paare von Strings zugeordnet sind. Dann sind die ausgangsseitigen Schaltkontakte der mehreren Strings oder Paare von Strings nicht nur über den Bewegungsantrieb mechanisch gekoppelt, sondern, soweit sie gleichpoligen eingangsseitigen Schaltkontakten der Strings oder Paaren von Strings zugeordnet sind, an einem Kontaktelement ausgebildet, das als Einheit von dem gemeinsamen Bewegungsantrieb bewegt wird.

Alternativ kann der gemeinsame Bewegungsantrieb mit einem gemeinsamen Betätigungselement, wie z. B. einer isolierten Welle, die eingangsseitigen Schaltkontakten für einige oder alle gleichpoligen eingangsseitigen Schaltkontakte bewegen, die den mehreren der Strings oder den mehreren der Paare von Strings zugeordnet sind.

Bei der erfindungsgemäßen Combinerbox kann der gemeinsame Bewegungsantrieb ein einziges gemeinsames Kontaktelement mit ausgangsseitigen Schaltkontakten für alle gleichpoligen separaten eingangsseitigen Schaltkontakte der Strings oder der Paare von Strings bewegen. Das heißt, der Schaltkontaktantrieb kann einen einzigen Bewegungsantrieb für alle Strings aufweisen, wobei er zur einpoligen Trennung der Strings ein einziges gemeinsames Kontaktelement mit ausgangsseitigen Schaltkontakten für alle gleichpoligen eingangsseitigen Schaltkontakte und zur zweipoligen Trennung zwei gemeinsame Kontaktelemente mit ausgangsseitigen Schaltkontakten für die jeweils gleichpoligen eingangsseitigen Schaltkontakte bewegt.

Bei einer erfindungsgemäßen Combinerbox wird vorzugsweise auf zusätzliche Sicherungen, insbesondere Schmelzsicherungen, verzichtet. Vielmehr beschränken sich die in der Combinerbox angeordneten und in oder zwischen die Stringleitungen und die Ausgangsleitungen geschalteten Teile der Überstromschutzeinrichtung vorzugsweise auf die Stromsensoren und die Schaltkontakte. Auf diese Weise wird eine zusätzliche Kostenersparnis bei der erfindungsgemäßen Combinerbox erreicht. Die aus dem Stand der Technik bekannten Reihenschaltungen einer Schmelzsicherung und eines Relais für jeden String, vgl. die US 2007/0107767 A1, ist dem gegenüber sehr viel teurer, ohne dass praktisch ein erhöhtes Niveau an Überstromsicherheit erreicht wird.

Wie bereits angedeutet wurde, kann die Schalteinrichtung der erfindungsgemäßen Combinerbox jeden der Strings oder zumindest jedes Paar von Strings allpolig von dem Wechselrichter trennen. Dies ist auch bevorzugt.

Die Stromsensoren der erfindungsgemäßen Combinerbox messen vorzugsweise den von jedem der Strings fließenden Strom auch dann, wenn in der Combinerbox Paare von Strings fest parallel geschaltet sind, um ein erhöhtes Maß an Überstromsicherheit zu erreichen.

Die gesamte Schalteinrichtung der erfindungsgemäßen Combinerbox kann vom normally open-Typ sein, d. h. ohne Anliegen eines Ansteuersignals an der Schalteinrichtung trennt diese die Strings von dem Wechselrichter. Auf diese Weise wird sichergestellt, dass bei einem Ausfall der Überstromschutzeinrichtung und entsprechend einem Wegfall der Ansteuerung der Schalteinrichtung eine Trennung der Strings von dem Wechselrichter erfolgt.

Grundsätzlich kann der gemeinsame Bewegungsantrieb des Schaltkontaktantriebs einen Federantrieb umfassen, der nur ansteuerbar ist, um die zugeordneten Strings von dem Wechselrichter zu trennen. Der Federantrieb wird durch manuelles Zuschalten der Strings zu dem Wechselrichter über die Schalteinrichtung gespannt. Ausgelöst wird der Federantrieb von der Überstromschutzeinrichtung bei auftretenden Überströmen. Für ein neuerliches Zuschalten der Strings zu dem Wechselrichter ist dann, wenn der Bewegungsantrieb nur den Federantrieb umfasst, ein manueller Eingriff in die Combinerbox erforderlich. Grundsätzlich kann aber auch für den Fall, dass der gemeinsame Bewegungsantrieb einen Federantrieb umfasst, zusätzlich ein Motorantrieb vorgesehen sein, der ansteuerbar ist, um die zugeordneten Strings dem Wechselrichter zuzuschalten. Der Federantrieb zum Trennen der Strings von dem Wechselrichter kann dann beim Zuschalten der Strings zu dem Wechselrichter durch den Motorantrieb gespannt werden. Vorzugsweise wird ein vorhandener Motorantrieb aber auch zum Trennen der zugeordneten Strings von dem Wechselrichter von der Überstromschutzeinrichtung angesteuert.

Die erfindungsgemäße Combinerbox kann einen Signaleingang für ein Trennsignal von dem Wechselrichter aufweisen, wobei die Schalteinrichtung so ausgebildet ist, dass sie beim Eingehen des Trennsignals jeden gemeinsamen Bewegungsantrieb ansteuert, um die Strings von dem Wechselrichter zu trennen. Die entsprechende Ausbildung der Schalteinrichtung kann Teile der Überstromschutzeinrichtung in der Combinerbox einbeziehen. Dadurch, dass die erfindungsgemäße Combinerbox auch für ein Trennen der Strings von dem Wechselrichter auf Signal von dem Wechselrichter hin ausgelegt ist, kann sie auch Sicherungen sowie zusätzliche Trennschalter in dem Wechselrichter ersetzen, die üblicherweise Teil einer den Wechselrichter einbeziehenden Gesamtüberstromsicherungsvorrichtung sind. Hierdurch werden zusätzliche Kostenvorteile erreicht.

Wenn der gemeinsame Bewegungsantrieb der erfindungsgemäßen Combinerbox einen Motorantrieb umfasst, kann sie weiterhin einen Signaleingang für ein Zuschaltsignal von dem Wechselrichter aufweisen, und die Schalteinrichtung kann so ausgebildet sein, dass sie beim Eingehen des Zuschaltsignals jeden gemeinsamen Bewegungsantrieb ansteuert, um die Strings dem Wechselrichter zuzuschalten. Der Signaleingang für das Zuschaltsignal kann grundsätzlich derselbe Signaleingang wie derjenige für das Trennsignal sein. Insbesondere kann es sich dabei um eine Schnittstelle für ein drahtgebundenes, ein auf die Ausgangsleitungen aufmoduliertes Power-Line-Communication-Signal oder ein drahtloses Signal handeln. Diese Schnittstelle kann auch zur sonstigen Kommunikation zwischen dem Wechselrichter und der erfindungsgemäßen Combinerbox genutzt werden.

Eine Erfindungsgemäße Combinerbox kann grundsätzlich nicht nur die hier beschriebenen Einrichtungen, sondern auch einen integrierten DC/DC-Steller umfassen.

Bei einer erfindungsgemäßen Photovoltaikanlage mit einem Wechselrichter, mit mehreren über mindestens eine Combinerbox parallel angeschlossenen Strings von Photovoltaikmodulen und mit Stromsensoren, mit denen der von jeder der Combinerboxen fließende Strom in dem Wechselrichter gemessen wird, sind die Combinerboxen erfindungsgemäße Combinerboxen mit einem Signaleingang für das Trennsignal von dem Wechselrichter. Der Wechselrichter gibt im Falle eines gemessenen Stroms, der eine zweite Überstromgrenze überschreitet, das Trennsignal zumindest an die Combinerbox aus, von der der Strom fließt, der die zweite Überstromgrenze überschreitet. Bei einer solchen erfindungsgemäßen Photovoltaikanlage bestehen die Teile einer die Überstromschutzeinrichtungen der Combinerboxen umfassenden DC-seitigen Gesamtüberstromsicherungsvorrichtung, die in dem Wechselrichter angeordnet und in oder zwischen die Ausgangsleitungen jeder Combinerbox geschaltet sind, vorzugsweise ausschließlich aus den Stromsensoren. Das heißt, zur Gewährleistung der Überstromsicherheit sind in dem Wechselrichter keine Schmelzsicherungen oder andere Sicherungen oder im Überstromfall ansteuerbare Trennschalter vorhanden.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere der relativer Anordnung und Wirkverbindung mehrerer Bauteile - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Stromsensor die Rede ist, ist dies so zu verstehen, dass genau ein Stromsensor, zwei Stromsensoren oder mehr Stromsensoren vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: illustriert eine erfindungsgemäße Combinerbox mit angeschlossenen Strings von Photovoltaikmodulen; und
- **Fig. 2**: zeigt einen Wechselrichter, der in Verbindung mit der Combinerbox 1 gemäß Fig. 1 eine erfindungsgemäße Photovoltaikanlage ausbildet.

### FIGURENBESCHREIBUNG

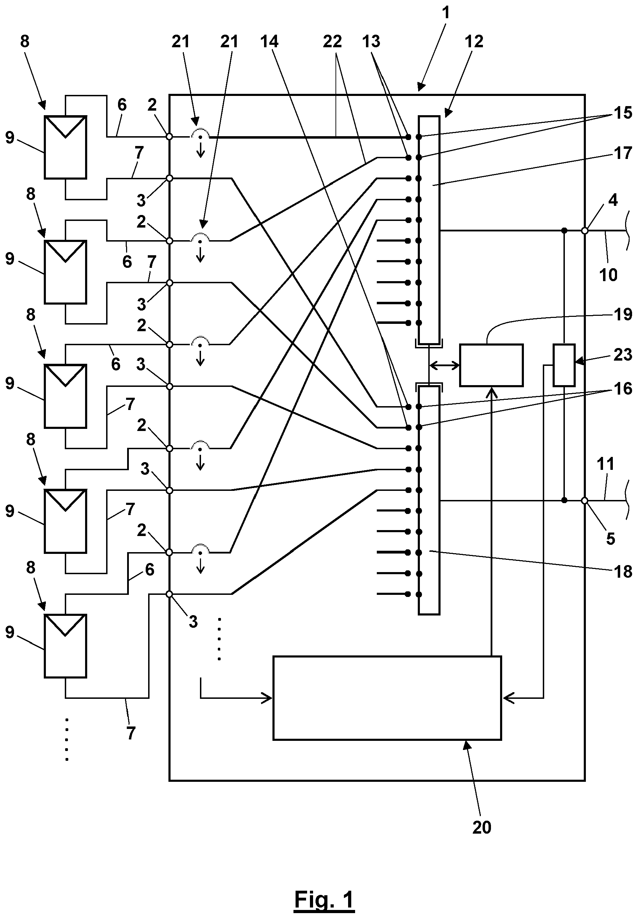

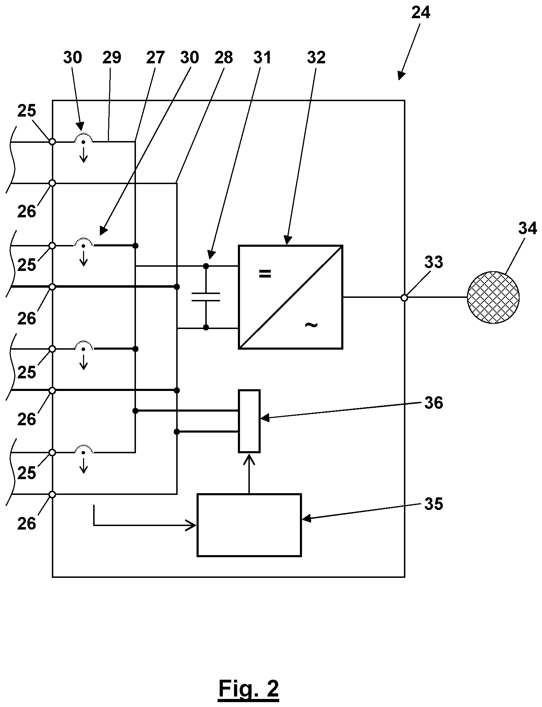

Die in Fig. 1 gezeigte Combinerbox 1 weist eine Vielzahl von Eingangsanschlüssen 2 und 3 sowie ein Paar von Ausgangsanschlüssen 4 und 5 auf. Jeweils ein Paar von Eingangsanschlüssen 2 und 3 ist für zwei Stringleitungen 6 und 7 vorgesehen, um einen String 8 von Photovoltaikmodulen 9 an die Combinerbox 1 anzuschließen. In Fig. 1 ist für jeden String 8 nur ein Photovoltaikmodul 9 wiedergegeben. Typischerweise umfasst jeder String 8 jedoch eine Reihenschaltung einer Vielzahl von Photovoltaikmodulen 9. Auch die Anzahl der Eingangsanschlüsse 2 und 3 der Combinerbox 1 ist in Fig. 1 kleiner als häufig realisiert dargestellt. So können Eingangsanschlüsse für 10, 20, 40 oder noch mehr Strings 8 vorhanden sein. Die Ausgangsanschlüsse 4 und 5 sind für ein Paar von Ausgangsleitungen 10 und 11 zum Anschluss der Combinerbox an einen in Fig. 2 dargestellten Wechselrichter vorgesehen.

In der Combinerbox 1 werden die Strings 8 parallel zueinander den Ausgangsanschlüssen 4 und 5 zugeschaltet. Dazu weist eine Schalteinrichtung 12 eingangsseitige Kontaktelemente 13 und 14 auf, die den einzelnen Eingangsanschlüssen 2 bzw. 3 zugeordnet sind. In Fig. 1 sind jeweils 10 eingangsseitige Schaltkontakte 13 und 14 dargestellt. Insoweit ist die Schalteinrichtung 12, soweit dargestellt, für 10 Strings vorgesehen. Ausgangsseitige Schaltkontakte 15 und 16 der Schalteinrichtung 12 sind an zwei Kontaktelementen 17 und 18 ausgebildet. Dabei sind alle ausgangsseitigen Schaltkontakte 15, die den gleichpoligen eingangsseitigen Schaltkontakten 13 zugeordnet sind, an dem Kontaktelement 17 vorgesehen, und alle ausgangsseitigen Schaltkontakte 16, die den gleichpoligen eingangsseitigen Schaltkontakten 14 zugeordnet sind, sind an dem Kontaktelement 18 vorgesehen. Die Kontaktelemente 17 und 18 sind mit den beiden Ausgangsanschlüssen verbunden, und sie sind mit einem Motorantrieb 19 gemeinsam auf die eingangsseitigen Schaltkontakte 13 und 14 zu und von diesen weg bewegbar, um die ausgangsseitigen Schaltkontakte 15, 16 mit den eingangsseitigen Schaltkontakten 13, 14 zu verbinden bzw. wieder von diesen zu trennen. Alternativ können auch die eingangsseitigen Schaltkontakte 13 und 14, beispielsweise mittels eines elektrisch isolierten oder aus elektrisch isolierendem Material ausgebildeten Betätigungselements auf die ausgangsseitigen Schaltkontakte 15 und 16 zu und von diesen weg bewegt werden. Angesteuert wird der Motorantrieb 19 von einer Überstromschutzeinrichtung 20. Die Überstromschutzeinrichtung 20 umfasst Stromsensoren 21 in Verbindungsleitungen 22 zwischen den Eingangsanschlüssen 2 und den eingangsseitigen Schaltkontakten 13. Die Stromsensoren 21 erfassen den in dem jeweiligen String 8 fließenden Strom. Wenn einer dieser Ströme eine Überstromgrenze überschreitet, steuert die Überstromschutzeinrichtung 20 den Motorantrieb 19 oder einen hier nicht separat dargestellten mechanischen Energiespeicher, bspw. mit einer von dem Motorantrieb vorgespannten Feder, so an, dass er die Kontaktelemente 17 und 18 mit den ausgangsseitigen Schaltkontakten 15 bzw. 16 von den eingangsseitigen Schaltkontakten 13 bzw. 14 entfernt. Dadurch werden alle Strings 8 von den Ausgangsanschlüssen 4 und 5 und auch voneinander getrennt. Auf diese Weise wird der die Überstromgrenze überschreitende Strom unterbrochen. Die Überstromschutzeinrichtung weist zusätzlich eine Schnittstelle 23 für eine Power-Line-Kommunikation über die Anschlussleitungen 10 und 11 mit dem daran angeschlossenen Wechselrichter auf. Der Wechselrichter kann ein Zuschaltsignal übermitteln, in dessen Folge der Motorantrieb 19 die Strings 8 dem Wechselrichter zuschaltet, indem er die Kontaktelemente 17 und 18 zum Verbinden der ausgangsseitigen Schaltkontakte 15, 16 mit den eingangsseitigen Schaltkontakten 13, 14 bewegt. Ebenso kann der Wechselrichter aber auch ein Trennsignal übermitteln, in dessen Folge der Motorantrieb 19 die Strings 8 von dem Wechselrichter ebenso trennt, als wenn die Überstromschutzeinrichtung 20 mit einem der Stromsensoren 21 einen Überstrom durch eine der Verbindungsleitungen 22 misst.

Es versteht sich, dass die einzelnen Schaltkontakte 13 untereinander so weit beabstandet oder so durch Isolierungen getrennt sind, dass durch das Entfernen der Kontaktelemente 15 und 16 die eingangsseitigen Schaltkontakte 13 und 14 ausreichend voneinander getrennt sind, so dass z. B. kein sogenannter Rückstrom von einem String 8 über benachbarte Kontakte 13 zu einem anderen String 8 fließen kann. Weiterhin ist klar, dass der Motorantrieb die Kontaktelemente 15 und 16 mit den ausgangsseitigen Schaltkontakten 15 und 16 so weit von den eingangsseitigen Schaltkontakten 13 und 14 trennt, dass etwaige Lichtbögen dazwischen sicher gelöscht werden. Selbstverständlich ist, dass über den gemeinsamen Bewegungsantrieb der Kontaktelemente 17 und 18 mit dem Motorantrieb 19 keine elektrische Kontaktierung zwischen den Kontaktelementen 17 und 18 erfolgt.

Der in Fig. 2 gezeigte Wechselrichter 24 weist Paare von eingangsseitigen Anschlüssen 25, 26 zum Anschluss jeweils einer Combinerbox gemäß Fig. 1 auf. Die Combinerboxen sind in dem Wechselrichter 24 parallel an Stromschienen 27, 28 angeschlossen. Dabei ist in jeder Verbindungsleitung 29 zwischen jedem Eingangsanschluss 25 und der Stromschiene 27 ein Stromsensor 30 angeordnet. Die Stromschienen 27 und 28 sind direkt mit einem Eingangszwischenkreis 31 eines DC/AC-Wandlers 32 verbunden. Über einen Ausgangsanschluss 33 gibt der DC/AC-Wandler 32 einen Wechselstrom in ein externes Wechselstromnetz 34 aus. Die Stromsensoren 30 sind Teil einer Überstromschutzeinrichtung 35 des Wechselrichters 24. Wenn einer der Stromsensoren 30 einen Strom misst, der eine zweite Überstromgrenze überschreitet, gibt die Überstromschutzeinrichtung 35 über eine Schnittstelle 36 zur Power- Line-Kommunikation mit den angeschlossenen Combinerboxen ein Trennsignal zumindest an die Combinerbox aus, in deren Verbindungsleitung 29 der die zweite Überstromgrenze überschreitende Strom fließt, um die an diese Combinerbox 1 angeschlossenen Strings 8 von der Combinerbox und damit von dem Wechselrichter 24 zu trennen.

Bei einer Photovoltaikanlage mit dem Wechselrichter 24 gemäß Fig. 2 und mehreren Combinerboxen 1 gemäß Fig. 1 besteht eine die Überstromschutzeinrichtungen 20 und 35 umfassende Gesamtüberstromsicherungsvorrichtung bezüglich ihrer in die stromführenden Leitungen geschalteten Teile ausschließlich aus den Stromsensoren 21 und 30 sowie den Schaltkontakten 13 bis 16. Hingegen sind keine Schmelzsicherungen vorgesehen, also weder in der Combinerbox 1 noch in dem Wechselrichter 24. Weiterhin umfasst der Wechselrichter 24 keine der Überstromsicherung dienende Trennschalter für die einzelnen Combinerboxen, d. h. die einzelnen Paare von Eingangsanschlüssen 25 und 26. Dies schließt aber nicht aus, dass zwischen den Stromschienen 27 und 28 und dem DC/AC-Wandler 32 ein in Fig. 2 nicht dargestellter Trennschalter vorhanden ist.

### BEZUGSZEICHENLISTE

- 1: Combinerbox
- 2: Eingangsanschluss
- 3: Eingangsanschluss
- 4: Ausgangsanschluss
- 5: Ausgangsanschluss
- 6: Stringleitung
- 7: Stringleitung
- 8: String
- 9: Photovoltaikmodul
- 10: Ausgangsleitung
- 11: Ausgangsleitung
- 12: Schalteinrichtung
- 13: Schaltkontakt
- 14: Schaltkontakt
- 15: Schaltkontakt
- 16: Schaltkontakt
- 17: Kontaktelement
- 18: Kontaktelement
- 19: Motorantrieb
- 20: Überstromschutzeinrichtung
- 21: Stromsensor
- 22: Verbindungsleitung
- 23: Schnittstelle
- 24: Wechselrichter
- 25: Eingangsanschluss
- 26: Eingangsanschluss
- 27: Stromschiene
- 28: Stromschiene
- 29: Verbindungsleitung
- 30: Stromsensor
- 31: Eingangszwischenkreis
- 32: DC/AC-Wandler
- 33: Ausgangsanschluss
- 34: Wechselstromnetz
- 35: Überstromschutzeinrichtung
- 36: Schnittstelle

## Patentansprüche

1. Combinerbox (1) mit
- Eingangsanschlüssen (2, 3) für Stringleitungen (6, 7) von mehreren Strings (8) von Photovoltaikmodulen (9),
- Ausgangsanschlüssen (4, 5) für ein Paar von Ausgangsleitungen (10, 11) zu einem Wechselrichter (24),
- einer Schalteinrichtung (12), mit der die Strings (8) dem Wechselrichter (24) zuschaltbar sind und die ausgangsseitige Schaltkontakte (15, 16) und für jeden der Strings (8) oder zumindest für jedes Paar von in der Combinerbox (1) fest parallelgeschalteten Strings (8) mindestens einen separaten eingangsseitigen Schaltkontakt (13, 14) aufweist, und
- einer Überstromschutzeinrichtung (20), die auftretende Überströme von oder zu jedem der Strings (8) oder zumindest von oder zu jedem der Paare von in der Combinerbox (1) fest parallelgeschalteten Strings (8) unterbricht,
- wobei die Schalteinrichtung (12) einen Schaltkontaktantrieb aufweist, der ansteuerbar ist, um die Strings (8) von dem Wechselrichter (24) zu trennen, und
- wobei die Überstromschutzeinrichtung (20) Stromsensoren (21) aufweist, die den von oder zu jedem der Strings (8) oder zumindest von oder zu jedem der Paare von in der Combinerbox (1) fest parallelgeschalteten Strings (8) fließenden Strom messen, und derart ausgebildet ist, dass sie im Falle eines gemessenen Stroms, der eine Überstromgrenze überschreitet, den Schaltkontaktantrieb ansteuert, um zumindest den String (8) oder das Paar von Strings (8), von oder zu dem der die Überstromgrenze überschreitende Strom fließt, von dem Wechselrichter (24) zu trennen,
**dadurch gekennzeichnet, dass** der Schaltkontaktantrieb einen gemeinsamen Bewegungsantrieb für mehrere der Schaltkontakte (13 bis 16) aufweist, die mehreren der Strings (8) oder mehreren der Paare von in der Combinerbox (1) fest parallelgeschalteten Strings (8) zugeordnet sind.

2. Combinerbox (1) nach Anspruch 1, **dadurch gekennzeichnet, dass** die Anzahl der mehreren der Strings (8) oder der mehreren der Paare von in der Combinerbox (1) fest parallelgeschalteten Strings (8) mindestens 5, vorzugsweise mindestens 10, beträgt.

3. Combinerbox (1) nach Anspruch 1 oder 2, **dadurch gekennzeichnet, dass** der gemeinsame Bewegungsantrieb ein gemeinsames Kontaktelement (17, 18) mit den ausgangsseitigen Schaltkontakten (15, 16) für alle gleichpoligen eingangsseitigen Schaltkontakte (13, 14) bewegt, die den mehreren der Strings (8) oder den mehreren der Paare von in der Combinerbox (1) fest parallelgeschalteten Strings (8) zugeordnet sind.

4. Combinerbox (1) nach Anspruch 3, **dadurch gekennzeichnet, dass** der gemeinsame Bewegungsantrieb ein gemeinsames Kontaktelement (17, 18) mit ausgangsseitigen Schaltkontakten (15, 16) für alle gleichpoligen separaten eingangsseitigen Schaltkontakte (13, 14) der Strings (8) oder der Paare von in der Combinerbox (1) fest parallelgeschalteten Strings (8) bewegt.

5. Combinerbox (1) nach einem der vorhergehenden Ansprüche, **dadurch gekennzeichnet, dass** die in der Combinerbox (1) angeordneten und in oder zwischen die Stringleitungen (6, 7) und die Ausgangsleitungen (4, 5) geschalteten Teile der Überstromschutzeinrichtung (20) aus den Stromsensoren (21) und den Schaltkontakten (13 bis 16) bestehen.

6. Combinerbox (1) nach einem der vorhergehenden Ansprüche, **dadurch gekennzeichnet, dass** die Schalteinrichtung (12) jeden der Strings (8) oder zumindest jedes Paar von in der Combinerbox (1) fest parallelgeschalteten Strings (8) allpolig von dem Wechselrichter (24) trennt.

7. Combinerbox (1) nach einem der vorhergehenden Ansprüche, **dadurch gekennzeichnet, dass** die Schalteinrichtung (12) vom normally open-Typ ist.

8. Combinerbox (1) nach einem der Ansprüche 1 bis 6, **dadurch gekennzeichnet, dass** der gemeinsame Bewegungsantrieb einen Federantrieb umfasst.

9. Combinerbox (1) nach einem der vorhergehenden Ansprüche, **dadurch gekennzeichnet, dass** der gemeinsame Bewegungsantrieb einen Motorantrieb (19) umfasst, der ansteuerbar ist, um die zugeordneten Strings (8) dem Wechselrichter (24) zuzuschalten.

10. Combinerbox (1) nach Anspruch 9, **dadurch gekennzeichnet, dass** ein Signaleingang für ein Zuschaltsignal von dem Wechselrichter (24) vorhanden ist, wobei die Schalteinrichtung (12) so ausgebildet ist, dass sie beim Eingehen des Zuschaltsignals jeden gemeinsamen Antrieb ansteuert, um die Strings (8) dem Wechselrichter (24) zuzuschalten.

11. Combinerbox (1) nach einem der vorhergehenden Ansprüche, **dadurch gekennzeichnet, dass** ein Signaleingang für ein Trennsignal von dem Wechselrichter (24) vorhanden ist, wobei die Schalteinrichtung (12) so ausgebildet ist, dass sie beim Eingehen des Trennsignals jeden gemeinsamen Bewegungsantrieb ansteuert, um die Strings (8) von dem Wechselrichter (24) zu trennen.

12. Combinerbox (1) nach Anspruch 10 oder 11, **dadurch gekennzeichnet, dass** der Signaleingang eine Schnittstelle (23) für ein drahtgebundenes, ein auf die Ausgangsleitungen (10, 11) aufmoduliertes Power-Line Communication-Signal oder ein drahtloses Signal ist.

13. Photovoltaikanlage mit einem Wechselrichter (24), mit mehreren über mindestens eine Combinerbox (1) parallel angeschlossenen Strings (8) von Photovoltaikmodulen (9) und mit Stromsensoren (30), mit denen der von jeder der Combinerboxen (1) fließende Strom in dem Wechselrichter (24) gemessen wird, **dadurch gekennzeichnet, dass** jede der Combinerboxen (1) nach Anspruch 11 ausgebildet ist und dass der Wechselrichter (24) im Falle eines gemessenen Stroms, der eine zweite Überstromgrenze überschreitet, das Trennsignal zumindest an die Combinerbox (1) ausgibt, von der der Strom fließt, der die zweite Überstromgrenze überschreitet.

14. Photovoltaikanlage nach Anspruch 13, **dadurch gekennzeichnet, dass** die Teile einer die Überstromschutzeinrichtung (20) jeder der Combinerboxen (1) umfassenden DC-seitigen Gesamtüberstromschutzvorrichtung, die in dem Wechselrichter angeordnet und in oder zwischen die Ausgangsleitungen (10, 11) jeder Combinerbox geschaltet sind, aus den Stromsensoren (30) bestehen.

## Claims

1. A combiner box (1) comprising
- input connectors (2, 3) for string lines (6, 7) from multiple strings (8) of photovoltaic modules (9),
- output connectors (4, 5) for a pair of output lines (10, 11) to an inverter (24),
- a switching device (12) that can be used to connect the strings (8) to the inverter (24) and comprising output-side switching contacts (15, 16) and at least one separate input-side switching contact (13, 14) for each of the strings (8) or at least for each pair of strings (8) permanently connected in parallel in the combiner box (1) and
- an overcurrent protection device (20) interrupting overcurrents occurring from or to each of the strings (8) or at least from or to each of the pairs of strings (8) permanently connected in parallel in the combiner box (1),
- wherein the switching device (12) has a switching contact drive that may be actuated in order to disconnect the strings (8) from the inverter (24), and
- wherein the overcurrent protection device (20) comprises current sensors (21) measuring the current flowing from or to each of the strings (8) or at least from or to each of the pairs of strings (8) permanently connected in parallel in the combiner box (1) and configured to actuate the switching contact drive in order to disconnect from the inverter (24) at least the string (8) or the pair of strings (8) from or to which the current exceeding the overcurrent limit flows in the event of a measured current exceeding an overcurrent limit,
**characterized in that** the switching contact drive has a common movement drive for multiple switching contacts (13 to 16) that are associated with multiple strings (8) or multiple pairs of strings (8) permanently connected in parallel in the combiner box (1).

2. The combiner box (1) as claimed in claim 1, **characterized in that** the number of the multiple strings (8) or of the multiple pairs of strings (8) permanently connected in parallel in the combiner box (1) is at least 5, preferably at least 10.

3. The combiner box (1) as claimed in claim 1 or 2, **characterized in that** the common movement drive moves a common contact element (17, 18) comprising the output-side switching contacts (15, 16) for all input-side switching contacts (13, 14) of the same polarity that are associated with the multiple strings (8) or with the multiple pairs of strings (8) permanently connected in parallel in the combiner box (1).

4. The combiner box (1) as claimed in claim 3, **characterized in that** the common movement drive moves a common contact element (17, 18) having output-side switching contacts (15, 16) for all same-polarity separate input-side switching contacts (13, 14) of the strings (8) or of the pairs of strings (8) permanently connected in parallel in the combiner box (1).

5. The combiner box (1) as claimed in one of the preceding claims, **characterized in that** the parts of the overcurrent protection device (20) that are arranged in the combiner box (1) and connected in or between the string lines (6, 7) and the output lines (4, 5) consist of the current sensors (21) and the switching contacts (13 to 16).

6. The combiner box (1) as claimed in one of the preceding claims, **characterized in that** the switching device (12) disconnects all poles of each of the strings (8) or at least of each pair of strings (8) permanently connected in parallel in the combiner box (1) from the inverter (24).

7. The combiner box (1) as claimed in one of the preceding claims, **characterized in that** the switching device (12) is of the normally open type.

8. The combiner box (1) as claimed in one of claims 1 to 7, **characterized in that** the common movement drive comprises a spring drive.

9. The combiner box (1) as claimed in one of the preceding claims, **characterized in that** the common movement drive comprises a motor drive (19) that may be actuated in order to connect the associated strings (8) to the inverter (24).

10. The combiner box (1) as claimed in claim 9, **characterized in that** there is a signal input for a connecting signal from the inverter (24), wherein the switching device (12) is configured to acuate each common drive in order to connect the strings (8) to the inverter (24) after receiving the connecting signal.

11. The combiner box (1) as claimed in one of the preceding claims, **characterized in that** there is a signal input for a disconnecting signal from the inverter (24), wherein the switching device (12) is configured to actuate each common movement drive in order to disconnect the strings (8) from the inverter (24) after receiving the disconnecting signal.

12. The combiner box (1) as claimed in claim 11 or 12, **characterized in that** the signal input is an interface (23) for a wired, a powerline communication signal modulated onto the output lines (10, 11) or a wireless signal.

13. A photovoltaic installation comprising an inverter (24), further comprising multiple strings (8) of photovoltaic modules (9), connected in parallel via at least one combiner box (1), and current sensors (30) that are used to measure in the inverter (24) the current flowing from each of the combiner boxes (1), **characterized in that** each of the combiner boxes (1) is configured as claimed in claim 11 and **in that** the inverter (24), in the event of a measured current exceeding a second overcurrent limit, outputs the disconnecting signal at least to the combiner box (1) from which the current flows that exceeds the second overcurrent limit.

14. The photovoltaic installation as claimed in claim 14, **characterized in that** the parts of a DC-side overall overcurrent safety apparatus, comprising the overcurrent protection device (20) of each of the combiner boxes (1), that are arranged in the inverter and connected in or between the output lines (10, 11) of each combiner box consist of the current sensors (30).

## Revendications

1. Boîtier combiné (1) comprenant
- des bornes d'entrée (2, 3) pour câbles de branche (6, 7) d'une pluralité de branches (8) de modules photovoltaïques (9),
- des bornes de sortie (4, 5) pour une paire de câbles de sortie (10, 11) vers un onduleur (24),
- un mécanisme de commutation (12) avec lequel les branches (8) sont commutables à l'onduleur (24) et avec lequel les contacts de commutation du côté sortie (15, 16) comportent un contact de commutation séparé du côté entrée (13, 14) pour chacune des branches (8) ou au moins pour chaque paire de branches (8) connectées en parallèle dans le boîtier combiné (1), et
- un dispositif de protection contre la surintensité (20), interrompant les surintensités survenant depuis ou vers les branches (8), ou au moins depuis ou vers une paire de branches (8) connectées en parallèle dans le boîtier combiné (1),
- dans lequel le mécanisme de commutation (12) comporte un actionneur de contact de commutation, qui peut être commandé pour déconnecter les branches (8) de l'onduleur (24), et
- dans lequel le dispositif de protection contre la surintensité (20) comporte des détecteurs de courant (21), qui mesurent les courants circulant depuis ou vers chacune des branches (8) ou au moins depuis ou vers chaque paire de branches (8) connectées en parallèle dans le boîtier combiné (1), et formé de sorte qu'au cas où un courant mesuré dépasse la limite de surintensité, il commande l'actionneur de contact de commutation, pour déconnecter au moins la branche (8) ou la paire de branche vers ou depuis laquelle circule le courant dépassant la limite de surintensité de l'onduleur (24),
**caractérisé en ce que** l'actionneur de contact de commutation comporte un mécanisme d'entraînement commun pour une pluralité de contacts de commutations (13 à 16), qui sont affectés à une pluralité de branches (8) ou à une pluralité de paires de branches (8) connectées en parallèle dans le boîtier combiné (1).

2. Boîtier combiné (1) selon la revendication 1, **caractérisé en ce que** le nombre de la pluralité de branches (8) ou de la pluralité de paires de branches (8) connectées en parallèle dans le boîtier combiné (1) soit d'au moins respectivement 5 ou 10.

3. Boîtier combiné (1) selon la revendication 1 ou 2, **caractérisé en ce que** le mécanisme d'entraînement commun entraîne un élément de contact commun (17, 18) avec les contacts de commutation côté sortie (15, 16) pour tous les contacts de commutation de même polarité côté entrée (13, 14), qui sont affectés à la pluralité de branches (8) ou à la pluralité de paires de branches (8) connectées en parallèle dans le boîtier combiné (1).

4. Boîtier combiné (1) selon la revendication 3, **caractérisé en ce que** le mécanisme d'entraînement commun entraîne un élément de contact commun (17, 18) avec les contacts de commutation côté sortie (15, 16) pour tous les contacts de commutation séparés de même polarité côté entrée (13, 14) des branches (8) ou des paires de branches (8) connectées en parallèle dans le boîtier combiné (1).

5. Boîtier combiné (1) selon une des revendications précédentes, **caractérisé en ce que** les parties du dispositif de protection contre la surintensité (20) arrangées dans le boîtier combiné (1) et connectées dans ou entre les câbles de branches (6, 7) et les bornes de sortie (4, 5) sont composées des détecteurs de courant (21) et des contacts de commutation (13 à 16).

6. Boîtier combiné (1) selon une des revendications précédentes, **caractérisé en ce que** le mécanisme de commutation (12) déconnecte sur tous les pôles chacune des branches (8) ou au moins chaque paire de branches (8) connectées en parallèle dans le boîtier combiné (1) de l'onduleur (24).

7. Boîtier combiné (1) selon une des revendications précédentes, **caractérisé en ce que** le mécanisme de commutation (12) est du type normalement ouvert.

8. Boîtier combiné (1) selon une des revendications 1 à 6, **caractérisé en ce que** le mécanisme d'entraînement commun comprend un ressort.

9. Boîtier combiné (1) selon une des revendications précédentes, **caractérisé en ce que** le mécanisme d'entraînement commun comprend un entraînement moteur (19), qui puisse être commandé pour commuter les branches affectées (8) à l'onduleur (24).

10. Boîtier combiné (1) selon la revendication 9, **caractérisé en ce qu'**une entrée de signal est disponible pour un signal de commutation venant de l'onduleur (24), dans lequel le mécanisme de commutation (12) est formé de telle sorte qu'il commande, à la réception du signal de commutation, chaque entraînement commun à commuter les branches (8) à l'onduleur (24).

11. Boîtier combiné (1) selon une des revendications précédentes, **caractérisé en ce qu'**une entrée de signal est disponible pour un signal de déconnexion venant de l'onduleur (24), dans lequel le mécanisme de commutation (12) est formé de telle sorte qu'il commande, à la réception du signal de déconnexion, chaque entraînement commun à déconnecter les branches (8) de l'onduleur (24).

12. Boîtier combiné (1) selon la revendication 10 ou 11, **caractérisé en ce que** l'entrée de signal est une interface (23) pour un signal filaire, un signal CPL modulé sur les câbles de sortie (10, 11) ou un signal sans fil.

13. Installation photovoltaïque comprenant un onduleur (24) avec une pluralité de branches (8) de modules photovoltaïques (9) connectées en parallèle sur au moins un boîtier combiné (1) et comprenant des détecteurs de courant (30) avec lesquels le courant circulant depuis chaque boîtier combiné (1) vers l'onduleur (24) est mesuré, **caractérisée en ce que** chacun des boîtiers combinés (1) est formé selon la revendication 11 et l'onduleur (24) émet, au cas où un courant mesuré dépasse une seconde limite de surintensité, le signal de déconnexion au moins au boîtier combiné (1) duquel provient le courant dépassant la seconde limite de surintensité.

14. Installation photovoltaïque selon la revendication 13, **caractérisée en ce que** les éléments d'un système complet de protection contre la surintensité côté courant continu comprenant le dispositif de protection contre la surintensité (20) de chacun des boîtiers combinés (1), éléments qui sont agencés dans l'onduleur et connectés dans ou entre les câbles de sortie (10, 11) de chaque boîtier combiné, consistent en les détecteurs de courant (30).
